# EUROPÄISCHE PATENTSCHRIFT

(11) **EP 1 924 625 B1**
(45) Veröffentlichungstag und Bekanntmachung des Hinweises auf die Patenterteilung: **02.10.2013**
(21) Anmeldenummer: 06777032.1
(22) Anmeldetag: 23.08.2006
(51) Int. Cl.: C08G 18/61, C09D 175/04

(54) **2K PUR-SYSTEME ENTHALTEND OH-FUNKTIONELLE POLYDIMETHYLSILOXANE**
TWO-COMPONENT POLYURETHANE SYSTEMS CONTAINING OH-FUNCTIONAL POLYDIMETHYLSILOXANES
SYSTEMES POLYURETHANE A DEUX CONSTITUANTS CONTENANT DES POLYDIMETHYLSILOXANES A FONCTION OH

(30) Priorität: 03.09.2005 DE 102005041925
(43) Veröffentlichungstag der Anmeldung: 28.05.2008
(73) Patentinhaber: Bayer Intellectual Property GmbH, 40789 Monheim (DE)
(72) Erfinder: NIESTEN, Meike, 51061 Köln (DE); TILLACK, Jörg, 51427 Bergisch Gladbach (DE)
(74) Vertreter: BIP Patents
(86) Internationale Anmeldenummer: PCT/EP2006/008278
(87) Internationale Veröffentlichungsnummer: WO 2007/025671

(56) Entgegenhaltungen:
- EP-A- 0 848 024
- WO-A-2004/022619
- US-A- 4 774 278
- US-B1- 6 475 568

## Beschreibung

Die vorliegende Erfindung betrifft neuartige hydroxylfunktionelle Polydimethylsiloxane sowie darauf basierende Polyurethanlacke und -beschichtungen.

2K-PUR Lacke und Beschichtungen verbinden eine gute mechanische Festigkeit mit einer hohen Beständigkeit gegen Lösemittel und Chemikalien. Aufgrund ihrer hervorragenden technologischen Eigenschaften werden 2K-PUR Lacke und Beschichtungen für eine Vielzahl von unterschiedlichsten Anwendungsgebieten eingesetzt, wie Großfahrzeuglackierungen, Autoreparaturlackierung, Coil Coating, Korrosionsschutz, Bodenbeschichtungen und Klebstoffe.

Die Modifizierung von 2K-PUR Lacksysteme mit Polydimethylsiloxanen (PDMS) ist bekannt. Durch die hohe Oberflächenspannung von PDMS werden spezielle Eigenschaften erzeugt wie gute Oberflächenbenetzung, Slip-Beständigkeit and eine easy-to-clean Oberfläche (Reusmann in Farbe und Lack, 105, Jahrgang 8/99, Seite 40-47, Adams in Paintindia, October 1996, Seite 31-37).

Um einen guten PDMS Einbau von PDMS zu gewährleisten und Migration des PDMS weitestgehend zu vermeiden, werden oft organofunktionelle PDMS-Typen wie alkylenamin- oder alkylenhydroxylfunktionelle PDMS-Derivate. Solche Lacksysteme werden z.B. in WO 1991/018954, EP-A 0 329 260 oder US-A 4 774 278 beschrieben.

EP-A-0 848 024 beschreibt Polyurethanbeschichtungszusammensetzungen zur Herstellung von Beschichtungen mit niedrigen Oberflächenenergieeigenschaften durch Einbau von Hydroxylgruppen enthaltende Polysiloxanen in dem Polyurethangerüst.

Die aminfunktionellen PDMS-Typen haben allerdings den Nachteil, dass die Topfzeit von darauf basierten Polyurethansystemen aufgrund der hohen Neigung zur Harnstoffbildung extrem verkürzt ist.

Die bekannten hydroxylfunktionellen PDMS-Typen führen zwar zu verbesserten Topfzeiten, jedoch weisen sie in der Regel Inkompatibilitäten mit der Polyisocyanatkomponente auf, so dass keine homogenen Filme hergestellt werden können und die Vernetzung nur unvollständig stattfindet. Dadurch liegt freies ungebundenes PDMS im Lack vor, welches mit der Zeit aus der Beschichtung migriert und zu Eigenschaftsverschlechterung der Beschichtung führt.

US-A 6 475 568 beschreibt den Einsatz von Copolyolen erhalten durch Umsatz von epoxyfunktionellen PDMS-Oligomeren und primären oder sekundären Aminen als Additiv für Kosmetikprodukte oder Textilweichmacher. Die Verwendbarkeit als 2K-PUR Bindemittel für Lacke und Beschichtungen wurde nicht beschrieben.

WO 2004/022619 beschreibt den Einsatz von Kettenverlängerern für Polyharnstoffsysteme, die, durch Umsatz von epoxyfunktionellem PDMS mit Aminen erhalten werden. Die Umsetzung von epoxyfunktionellen PDMS mit Hydroxylaminen zu entsprechend OH-funktionellen Verbindungen wurde nicht beschrieben.

Gegenstand der Erfindung sind Zusammensetzungen enthaltend
A) hydroxylgruppenhaltige Polydimethylsiloxane mit zahlenmittleren Molekulargewichten von 400 bis 3000 g/mol und einer mittleren OH-Funktionalität von ≥ 1,8, dadurch gekennzeichnet, dass diese wenigstens eine Struktureinheit der Formel (I) aufweisen: 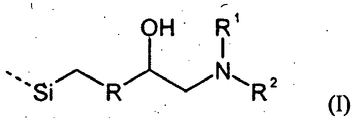 wobei
   - R: ein aliphatischer gegebenenfalls verzweigter C₁- bis C₂₀-Rest ist,
   - R¹: ein gegebenenfalls verzweigter Hydroxyalkylrest mit 2 bis 10 Kohlenstoffatomen ist und
   - R²: entweder Wasserstoff ist oder der Definition des Restes R¹ entspricht
   und
B) weitere von A) verschiedene Polyhydroxyverbindungen oder Polyamine und
C) Polyisocyanate.

Bevorzugt werden die Komponenten A) und B) so eingesetzt, dass 0,01 bis 20 Gew.% Komponente A) und 80 bis 99,99 Gew.% Komponente B), bevorzugt, bevorzugt 0,1 bis 10 Komponente A) und 90 bis 99,90 Gew.% Komponente B) vorliegen.

Bevorzugt beträgt das Verhältnis von NCO-Gruppen zu OH und/oder NH-funktionellen Verbindungen 0,5 : 1 bis 2,0 : 1, besonders bevorzugt 0,8 : 1 bis 1,5 : 1.

Bevorzugt haben die in A) eingesetzten hydroxylgruppenhaltigen Polydimethylsiloxane eine mittlere OH-Funktionalität von 1,9 bis 6.

Solche einzusetzenden hydroxylgruppenhaltigen Polydimethylsiloxane sind erhältlich, indem entsprechende epoxyfunktionelle Polydimethylsiloxane mit Hydroxylaminen vorzugsweise in einem stöchiometrischen Verhältnis von Epoxygruppe zu NH-Funktion umgesetzt werden.

Die dazu eingesetzten epoxyfunktionellen Polydimethylsiloxane weisen bevorzugt 1 bis 4 Epoxygruppen pro Molekül auf. Ferner haben sie zahlenmittlere Molekulargewichte von bevorzugt 150 bis 2800 g/mol, besonders bevorzugt 250 bis 2000 g/mol.

Bevorzugte epoxyfunktionelle Polydimethylsiloxane sind α,ω-Epoxy-dimethylsiloxane entsprechend der Formel (II) mit den vorstehenden Molekulargewichten und im Mittel 2 Epoxy-funktionen pro Molekül. Solche Produkte sind beispielsweise von GE Bayer Silicones, Leverkusen, Deutschland, Tego, Essen, Deutschland oder Wacker, München, Deutschland kommerziell erhältlich. 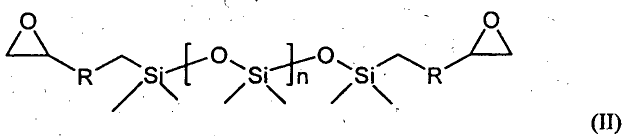 wobei
- R: ein gegebenenfalls verzweigter aliphatischer C₁- bis C₁₀-Rest ist und
- n: eine ganze Zahl von 1 bis 25

Die eingesetzten Hydroxylamine entsprechen der Formel (III) 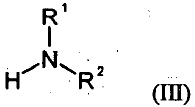 wobei
- R¹: ein gegebenenfalls verzweigter Hydroxyalkylrest mit 2 bis 10 Kohlenstoffatomen ist und
- R²: entweder Wasserstoff ist oder der Definition des Restes R¹ entspricht.

Bevorzugte Hydroxylamine sind Ethanolamin, Propanolamin, Diethanolamin und Dipropanolamin. Besonders bevorzugt ist Diethanolamin.

Zur Herstellung der erfindungswesentlichen modifizierten Siloxane der Komponente A) wird das epoxyfunktionelle Siloxan der vorstehend genannten Art gegebenenfalls in einem Lösemittel vorgelegt und dann mit der erforderlichen Menge des hydroxylamins oder einer Mischung mehrerer Hydroxylamine umgesetzt. Die Reaktionstemperatur beträgt typischerweise 20 bis 150 °C und wird solange geführt, bis keine freien Epoxygruppen mehr nachweisbar sind.

In Komponente B) können die an sich bekannten Polyhydroxylverbindungen vom Polyacrylat, Polyester-, Polyether-, Polycarbonat- oder Polyestercarbonattyp, Rizinusöl oder Abmischungen von Rizinusöl mit Keton/Formaldehyd-Kondensaten der in der GB-A 1 182 884 oder EP-A-0 364 738 beschriebenen Art, oder beliebige Gemische solcher Polyhydroxylverbindungen eingesetzt werden.

Bei den genannten Polyhydroxypolyacrylaten handelt es sich um hydroxylgruppenaufweisende Copolymerisate olefinisch ungesättigter Verbindungen eines dampfdruck- bzw. membranosmometrisch bestimmten Molekulargewichts Mₙ von 800 bis 50.000 g/mol, bevorzugt 1000 bis 20.000 g/mol und besonders bevorzugt 5000 bis 10.000 und einem Hydroxylgruppengehalt von 0,1 bis 12, bevorzugt 1 bis 10 und besonders bevorzugt 2 bis 6 Gew.-%.

Es handelt sich bei diesen Verbindungen um Copolymerisate von hydroxylgruppen- aufweisenden olefinischen Monomeren mit hydroxylgruppenfreien olefmischen Monomeren.

Beispiele für geeignete Monomere sind Vinyl- bzw. Vinylidenmonomere wie Styrol, α-Methylstyrol, o- bzw. p-Chlorstyrol, o-, m- oder p-Methylstyrol, p-tert.-Butylstyrol, Acrylsäure, (Meth)Acrylnitril, Acryl- und Methacrylsäureester mit 1 bis 8 Kohlenstoffatomen wie Alkoholkomponente wie beispielsweise Ethylacrylat, Methylacrylat, n- bzw. Isopropylacrylat, n-Butylacrylat, 2-Ethylhexylacrylat, 2- Ethylhexylmethacrylat, Isooctylacrylat, Methylmethacrylat, Ethylmethacrylat, Butylmethacrylat, Isooctylmethacrylat; Diester der Fumarsäure, Itaconsäure, Maleinsäure mit 4 bis 8 Kohlenstoffatomen in der Alkoholkomponente (Meth)Acrylsäureamid, Vinylester von Alkanmonocarbonsäure mit 2 bis 5 Kohlenstoffatomen wie Vinylacetat oder Vinylpropionat und Hydroxyalkylester der Acrylsäure oder Methacrylsäure mit 2 bis 4 Kohlenstoffatomen im Hydroxyalkylrest wie z.B. 2-Hydroxyethyl- , 2-Hydroxypropyl-, 4-Hydroxybutyl, Trimethylolpropanmono- oder Pentaerythritmonoacrylat oder -methacrylat. Beliebige Gemische der beispielhaften genannten Monomeren können bei der Herstellung der hydroxyfunktionellen Polyacrylate selbstverständlich auch eingesetzt werden.

Bei den genannten Polyesterpolyolen handelt es sich beispielsweise um solche eines zahlenmittleren, aus Funktionalität und Hydroxylzahl berechenbaren Molekulargewichtes von 200 bis 3000 g/mol, bevorzugt von 250 bis 2500 g/mol, mit einem Hydroxylgruppengehalt von 1 bis 21 Gew.%, bevorzugt 2 bis 18 Gew.%, wie sie sich in an sich bekannter Art und Weise durch Umsetzung von mehrwertigen Alkoholen mit unterschüssigen Mengen an mehrwertigen Carbonsäuren, entsprechenden Carbonsäureanhydriden, Polycarbonsäureestern von niederen Alkoholen oder Lactonen herstellen lassen.

Zur Herstellung dieser Polyesterpolyole geeignete mehrwertige Alkohole sind insbesondere solche des Molekulargewichtsbereichs 62 bis 400 g/mol wie 1,2-Ethandiol, 1,2- und 1, 3-Propandiol, die isomeren Butandiole, Pentandiole, Hexandiole, Heptandiole und Octandiole, 1,2- und 1,4-Cyclohexandiol, 1,4-Cyclohexandimethanol, 4,4'-(1-Methylethyliden)-biscyclohexanol, 1,2,3- Propantriol, 1,1,1-Trimethylolethan, 1,2,6-Hexantriol, 1,1,1-Trimethylolpropan, 2,2-Bis(hydroxymethyl)-1,3-propandiol oder 1,3,5- Tris(2-hydroxyethyl)-isocyanurat.

Die zur Herstellung der Polyesterpolyole verwendeten Säuren oder Säurederivate können aliphatischer, cycloaliphatischer und/oder heteroaromatischer Natur sein und gegebenenfalls, z. B. durch Halogenatome, substituiert und/oder ungesättigt sein. Beispiele geeigneter Säuren sind beispielsweise mehrwertige Carbonsäuren des Molekulargewichtsbereichs 118 bis 300 oder deren Derivate wie beispielsweise Bernsteinsäure, Adipinsäure, Sebacinsäure, Phthalsäure, Isophthalsäure, Trimellitsäure, Phthalsäureanhydrid, Tetrahydrophthalsäure, Maleinsäure, Maleinsäureanhydrid, dimere und trimere Fettsäuren, Terephthalsäuredimethylester und Terephthalsäurebis- glykolester.

Zur Herstellung der Polyesterpolyole können auch beliebige Gemische dieser beispielhaft genannten Ausgangsverbindungen eingesetzt werden.

Auch geeignet sind Polyesterpolyole, wie sie sich in an sich bekannter Weise aus Lactonen und einfachen mehrwertigen Alkoholen, wie z. B. den oben beispielhaft genannten, als Startermolekülen unter Ringöffnung herstellen lassen. Geeignete Lactone zur Herstellung dieser Polyesterpolyole sind beispielsweise β-Propiolacton, γ- Butyrolacton, γ- und δ-Valerolacton, ε-Caprolacton, 3,5, 5- und 3,3,5- Trimethylcaprolacton oder beliebige Gemische solcher Lactone.

Geeignete Polyetherpolyole sind beispielsweise solche eines mittleren, aus Funktionalität und Hydroxylzahl berechenbaren Molekulargewichtes von 200 bis 6000 g/mol, bevorzugt 250 bis 4000 g/mol, mit einem Hydroxylgruppengehalt von 0,6 bis 34 Gew.%, bevorzugt 1 bis 27 Gew.%, wie sie in an sich bekannter Weise durch Alkoxylierung geeigneter Startermoleküle zugänglich sind. Zur Herstellung dieser Polyetherpolyole können beliebige mehrwertige Alkohole, beispielsweise solche des Molekulargewichtsbereichs 62 bis 400 g/mol, wie sie oben bei der Herstellung von Polyesterpolyolen beschrieben wurden, als Startermoleküle eingesetzt werden.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bevorzugte Polyetherpolyole sind solche, deren Alkylenoxideinheiten zu mindestens 80 mol-% aus Propylenoxid-, vorzugsweise jedoch ausschließlich aus Propylenoxideinheiten bestehen.

Geeignete Polyhydroxylverbindungen vom Polycarbonattyp sind die an sich bekannten Polycarbonatdiole, wie sie sich beispielsweise durch Umsetzung von zweiwertigen Alkoholen, beispielsweise solchen, wie sie oben in der Liste der mehrwertigen Alkohole des Molekulargewichtsbereichs 62 bis 400 g/mol beispielhaft genannt sind, mit Diarylcarbonaten, wie Diphenyl- oder Dimethylcarbonat, oder Phosgen herstellen lassen, und die ein aus Hydroxylgruppengehalt und -funktionalität errechenbares Molekulargewicht von 250 bis 1000 g/mol aufweisen.

Geeignete Polyhydroxylverbindungen vom Polyestercarbonattyp sind insbesondere die an sich bekannten Estergruppen- und Carbonatgruppen aufweisende Diole, wie sie beispielsweise gemäß der Lehre der DE-A 1 770 245 durch Umsetzung zweiwertiger Alkohole mit Lactonen der oben beispielhaft genannten Art, insbesondere ε- Caprolacton und anschließende Reaktion der dabei entstehenden Polyesterdiole mit Diphenyl- oder Dimethylcarbonat erhalten werden können. Diese Polyhydroxylverbindungen weisen im allgemeinen ein aus Hydroxylgruppengehalt und -funktionalität errechenbares Molekulargewicht von 500 bis 3000 g/mol auf.

Die Polyolkomponente B) kann neben den beispielhaft genannten höhermolekularen Polyhydroxylverbindungen zur gezielten Einstellung der Viskosität der erfindungsgemäßen Zweikomponenten-Beschichtungsmittel auch bis zu 50 Gew.- %, vorzugsweise bis zu 20 Gew.-%, bezogen auf die Gesamtmenge an Komponente BI), an einfachen mehrwertigen, gegebenenfalls Ethersauerstoff aufweisenden Alkoholen des Molekulargewichtsbereichs 62 bis 199 g/mol, wie beispielsweise 1, 2-Ethandiol, 1,2- und 1,3-Propandiol, 1,4- Butandiol, Diethylenglykol oder Dipropylenglykol oder beliebige Gemische derartiger einfacher mehrwertiger Alkohole enthalten

Als Polyamine können in B) di-primäre aromatische Diamine, die in ortho-Stellung zu jeder Aminogruppe mindestens einen Alkylsubstituenten mit 2 bis 3 Kohlenstoffatomen und gegebenenfalls zudem in weiteren ortho-Positionen zu den Aminogruppen Methyl-Substituenten aufweisen, eingesetzt werden. Diese Verbindungen weisen bevorzugt ein Molekulargewicht von 178 bis 346 g/mol auf. Typische Beispiele derartiger aromatischer Diamine sind 1-Methyl-3,5-diethyl-2,4-diaminobenzol, 1-Methyl-3,5-diethyl-2,6-diaminobenzol, 1,3,5-Triethyl-2,6-diaminobenzol, 3,5,3',5'-Tetraethyl-4,4'-diamino-diphenylmethan, 3,5,3'5'-Tetraisopropyl-4,4'-diaminodiphenyl-methan, 3,5-Diethyl-3'5'-diisopropyl-4,4'-diamino-di-phenylmethan oder beliebige Gemische derartiger Diamine.

Ebenfalls geeignet als Polyamine sind aminofunktionelle Polyasparaginsäureester der allgemeinen Formel (IV) 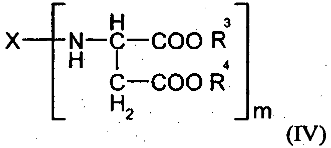 in der
- X: für einen n-wertigen organischen Rest steht, der durch Entfernung der primären Aminogruppen eines n-wertigen Polyamins erhalten wird,
- R³, R⁴: für gleiche oder verschiedene organische Reste, die unter den Reaktionsbedingungen gegenüber Isocyanatgruppen inert sind, stehen und
- m: für eine ganze Zahl von mindestens 2 steht.

Die Gruppe X in Formel (IV) basiert bevorzugt auf einem m-wertigen Polyamin ausgewählt aus der Gruppe bestehend aus Ethylendiamin, 1,2-Diaminopropan, 1,4-Diaminobutan, 1,6-Diaminohexan, 2,5-Diamino-2,5-dimethylhexan, 2,2,4- und/oder 2,4,4-Trimethyl-1,6-diaminohexan, 1,11-Diaminoundecan, 1,12-Diaminododecan, 1-Amino-3,3,5-trimethyl-5-aminomethyl-cyclohexan, 2,4-und/oder 2,6-Hexahydrotoluylendiamin, 2,4'-und/oder 4,4'-Diamino-dicyclohexylmethan, 3,3'-Dimethyl-4,4'-diamino-dicyclohexylmethan, 2,4,4'-Triamino-5-methyl-dicyclohexylmethan und Polyetherpolyaminen mit aliphatisch gebundenen primären Aminogruppen mit einem zahlenmittleren Molekulargewicht Mₙ von 148 bis 6000 g/mol.

Besonders bevorzugt basiert die Gruppe X auf 1,4-Diaminobutan, 1,6-Diaminohexan, 2,2,4- und/oder 2,4,4-Trimethyl-1,6-diaminohexan, 1-Amino-3,3,5-trimethyl-5-aminomethyl-cyclohexan, 4,4'-Diamino-dicyclohexylmethan oder 3,3'-Dimethyl-4,4'-diamino-dicyclohexylmethan.

In Bezug auf die Reste R³ und R⁴ bedeutet "unter den Reaktionsbedingungen gegenüber Isocyanatgruppen inert", dass diese Reste keine Gruppen mit Zerewitinoff-aktivem Wasserstoff (CH-acide Verbindungen; vgl. Römpp Chemie Lexikon, Georg Thieme Verlag Stuttgart) wie OH, NH oder SH aufweisen.

Bevorzugt sind R³ und R⁴ unabhängig voneinander C₁ bis C₁₀-Alkylreste, besonders bevorzugt Methyl oder Ethylreste.

Für den Fall, dass X auf 2,4,4'-Triamino-5-methyl-dicyclohexylmethan basiert, sind bevorzugt R³ = R⁴ = Ethyl.

Bevorzugt ist m in Formel (IV) eine ganze Zahl von 2 bis 6, besonders bevorzugt 2 bis 4.

Die Herstellung der aminofunktionellen Polyasparaginsäureester erfolgt in an sich bekannter Weise durch Umsetzung der entsprechenden primären Polyamine der Formel

X-[NH₂]ₘ (V)

mit Malein- oder Fumarsäureestern der allgemeinen Formel

R³OOC-CH=CH-COOR⁴ (VI)

Geeignete Polyamine der Formel (V) sind die oben als Basis für die Gruppe X genannten Diamine.

Beispiele geeigneter Malein- oder Fumarsäureester der Formel (VI) sind Maleinsäuredimethylester, Maleinsäurediethylester, Maleinsäuredibutylester und die entsprechenden Fumarsäureester.

Die Herstellung der aminofunktionellen Polyasparaginsäureester aus den genannten Ausgangsmaterialien erfolgt bevorzugt innerhalb des Temperaturbereichs von 0 bis 100 °C, wobei die Ausgangsmaterialien in solchen Mengenverhältnissen eingesetzt werden, dass auf jede primäre Aminogruppe mindestens eine, vorzugsweise genau eine olefinische Doppelbindung entfällt, wobei im Anschluss an die Umsetzung gegebenenfalls im Überschuss eingesetzte Ausgangsmaterialien destillativ abgetrennt werden können. Die Umsetzung kann in Substanz oder in Gegenwart geeigneter Lösungsmittel wie Methanol, Ethanol, Propanol oder Dioxan oder Gemischen derartiger Lösungsmittel erfolgen.

Neben dem aminofunktionellen Polyasparaginsäureester der Komponente können in den erfindungsgemäßen Beschichtungssystemen auch Verbindungen des Molekulargewichtsbereichs Mₙ von 112 bis 6500 g/mol enthalten sein, die pro Molekül mindestens zwei Struktureinheiten der Formel (VII) aufweisen,

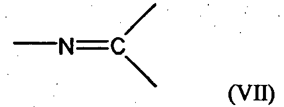

Diese optionalen Verbindungen mit verkappten Aminofunktionen, die im Rahmen der Erfindung als Polyaldimine bzw. Polyketimine bezeichnet werden, weisen ein Molekulargewicht Mₙ von 112 bis 6500 g/mol, vorzugsweise 140 bis 2500 g/mol und besonders bevorzugt 140 bis 458 g/mol auf. Das Molekulargewicht kann, falls es sich nicht als Summe der Atomgewichte der einzelnen Elemente ohnehin leicht ermitteln lässt, beispielsweise aus der Funktionalität und dem Gehalt an funktionellen Gruppen (beispielsweise ermittelbar durch Bestimmung der nach Hydrolyse vorliegenden primären Aminogruppen) errechnet oder auch, bei höhermolekularen Verbindungen, gelpermeationschromatographisch unter Verwendung von Polystyrol als Standard ermittelt werden.

Zu den bevorzugten Polyaldiminen bzw. Polyketiminen gehören Verbindungen der allgemeinen Strukturformel (VIII) 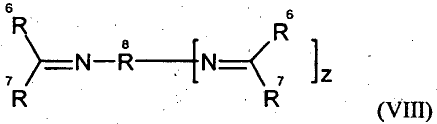 wobei
- R⁶ und R⁷: unabhängig voneinander Wasserstoff oder Kohlenwasserstoffreste mit bis zu 20 Kohlenstoffatomen sind, wobei R⁶ und R⁷ in letzterem Fall auch zusammen mit dem Kohlenstoffatom einen 5- oder 6-gliedrigen cycloaliphatischen Ring bilden können,
- R⁸: ein (z+1)-wertiger Rest ist, wie er durch Entfernung der primären Aminogruppen aus einem entsprechenden, gegebenenfalls Sauerstoff- und/oder Stickstoffatome enthaltenden Polyamin erhalten wird.
- z: eine ganze Zahl von 1 bis 3 ist.

Bevorzugt sind R⁶ und R⁷ unabhängig voneinander Alkylreste mit 1 bis 8 Kohlenstoffatomen.

Bevorzugt weist das R⁸ zugrunde liegende Polyamin ein zahlenmittleres Molekulargewicht Mₙ von 88 bis 2000 g/mol auf.

Besonders bevorzugt sind Verbindungen der Formel (VIII), in der alle Reste R⁶ für Wasserstoff stehen, die Reste R⁷ für Kohlenwasserstoffreste mit bis zu 8 Kohlenstoffatomen stehen und z = 1 ist.

Die zur Herstellung der Polyaldimine bzw. Polyketimine verwendbaren Aldehyde bzw. Ketone entsprechen der Formel (IX) 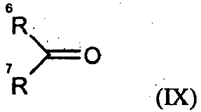 und weisen vorzugsweise ein Molekulargewicht von 44 bis 128 g/mol (Aldhehyde) bzw. 58 bis 198 g/mol (Ketone) auf.

Geeignete Aldehyde sind beispielsweise Acetaldehyd, Propionaldehyd, n-Butyraldehyd, Isobutyraldehyd, Trimethylacetataldehyd, 2,2-Dimethylpropanal, 2-Ethylhexanal, 3-Cyclohexan-1-carboxaldehyd, Hexanal, Heptanal, Octanal, Valeraldehyd, Benzaldehyd, Tetrahydrobenzaldehyd, Hexahydrobenzaldehyd, Propargyladehyd, p-Toluylaldehyd, Phenylethanal, 2-Methylpentanal, 3-Methylpentanal, 4-Methylpentanal, Sorbinaldehyd.

Besonders bevorzugt sind dabei n-Butyraldehyd, Isobutyraldehyd, Trimethlyacetaldehyd, 2-Ethylhexanal und Hexahydrobenzaldehyd.

Geeignete Ketone sind beispielsweise Aceton, Methylethylketon, Methylpropylketon, Methylisopropylketon, Methylbutylketon, Methylisobutylketon, Methyl-tert-butylketon, Methyl-n-amylketon, Methylisamyl-keton, Methylheptylketon, Methylundecylketon, Diethylketon, Ethylbutylketon, Ethylamylketon, Diisopropylketon, Diisobutylketon, Cyclohexanon, Cyclopentanon, Methylcyclohexanon, Isophoron, 5-Methyl-3-heptanon, 1-Phenyl-2-propanon, Acetophenon, Methylnonylketon, Dinoylketon, 3,3,5-Trimethlycyclohexanon.

Besonders bevorzugte Ketone sind Cyclopentanon, Cyclohexanon, Methylcyclopentanon, Methylcyclohexanon, 3,3,5-Trimethylcyclopentanon, Cyclobutanon, Methylcyclobutanon, Aceton, Methylethylketon, Methylisobutylketon.

Es könnten selbstverständlich auch Mischungen verschiedener Ketone bzw. Aldehyde und auch Mischungen von Ketonen mit Aldehyden eingesetzt werden um spezielle Eigenschaften zu erzielen.

Bei den zur Herstellung der Polyaldimine bzw. Polyketimine zum Einsatz gelangenden Polyaminen handelt es sich um organische Verbindungen, die mindestens zwei und vorzugsweise 2 (z = 1) aliphatisch und/oder cycloaliphatisch gebundene primäre Aminogruppen aufweisen. Die Verwendung von solchen Aminen, die aromatisch gebundene Aminogruppen aufweisen, ist zwar ebenfalls möglich, jedoch weniger bevorzugt. Die Polyamine weisen im allgemeinen ein zahlenmittleres Molekulargewicht von 60 bis 6000 g/mol, vorzugsweise 88 bis 2000 g/mol und besonders bevorzugt 88 bis 238 g/mol auf. Geeignete Polyamine zur Herstellung dieser der Polyaldimine bzw. Polyketimine sind beispielsweise die bereits oben im Zusammenhang mit der Komponente B) genannten Verbindungen. Selbstverständlich können zur Herstellung der Komponente B) und der optionalen Polyaldimine bzw. Polyketimine jeweils unterschiedliche Polyamine der beispielhaft genannten Art eingesetzt werden.

Die Herstellung der Polyaldimine bzw. Polyketimine erfolgt nach an sich bekannten Methoden durch Umsetzung der Ausgangskomponenten unter Einhaltung eines Stöchiometrischen Verhältnisses von Aminogruppen zu Aldehyd- bzw. Ketogruppen von 1:1 bis 1:1,5. Gegebenfalls können zur Reaktionsbeschleunigung katalytische Mengen von sauren Substanzen wie p-Toluol-sulfonsäure, Chlorwasserstoff, Schwefelsäure oder Aluminiumchlorid mit verwendet werden.

Die Umsetzung erfolgt im allgemeinen innerhalb des Temperaturbereichs von 20 bis 180°C, wobei die Reaktion gegebenenfalls unter Verwendung eines Schleppmittels (z.B. Toluol, Xylol, Cyclohexan und Octan) zur Entfernung des Reaktionswassers, so lange durchgeführt wird, bis die berechnete Menge an Wasser (1 Mol Wasser pro Mol primäre Aminogruppe) abgespalten ist bzw. bis kein Wasser mehr abgespalten wird. Anschließend werden die Phasen getrennt bzw. das Schleppmittel und gegebenenfalls vorliegende nicht umgesetzte Edukte destillativ abgetrennt.

Geeignete Polyisocyanate der Komponente C) sind organische Polyisocyanate mit einer mittleren NCO-Funktionalität von mindestens 2 und einem Molekulargewicht von mindestens 140 g/mol. Gut geeignet sind vor allem (i) unmodifizierte organische Polyisocyanate des zahlenmittleren Molekulargewichtsbereichs von 140 bis 300 g/mol, (ii) Lackpolyisocyanate eines zahlenmittleren Molekulargewichts von 300 bis 1000 g/mol sowie (iii) urethangruppenaufweisende NCO-Prepolymere mit zahlenmittleren Molekulargewichten > 1000 g/mol oder Gemische aus (i) bis (iii).

Beispiele für Polyisocyanate der Gruppe (i) sind 1,4-Diisocyanatobutan, 1,6-Diisocyanatohexan (HDI), 1,5-Diisocyanato-2,2-dimethylpentan, 2,2,4- bzw. 2,4,4-Trimethyl-1,6-diisocyanatohexan, 1-Isocyanato-3,3,5-trimethyl-5-isocyanatomethyl-cyclohexan (IPDI), 1-Isocyanato-1-methyl-4-(3)-isocyanatomethyl-cyclohexan, Bis-(4-isocyanatocyclohexyl)methan, 1,10-Diisocyanatodecan, 1,12-Diisocyanato-dodecan, Cyclohexan-1,3- und -1,4-diisocyanat, Xylylendiisocyanat-Isomere, Triisocyanatononan (TIN), 2,4-Diisocyanatotoluol oder dessen Gemische mit 2,6-Diiso-cyanatotoluol mit bevorzugt, bezogen auf Gemische, bis zu 35 Gew.% 2,6-Diisocyanatotoluol, 2,2'-, 2,4'-, 4,4'-, Diisocyanatodiphenylmethan oder technische Polyisocyanatgemische der Diphenylmethanreihe oder beliebige Gemische der genannten Isocyanate. Bevorzugt kommen dabei die Polyisocyanate der Diphenylmethanreihe, besonders bevorzugt als Isomerengemische, zum Einsatz.

Polyisocyanate der Gruppe (ii) sind die an sich bekannten Lackpolyisocyanate. Unter dem Begriff "Lackpolyisocyanate" sind im Rahmen der Erfindung Verbindungen oder Gemische von Verbindungen zu verstehen, die durch an sich bekannte Oligomerisierungsreaktion von einfachen Diisocyanaten der unter (i) beispielhaft genannten Art erhalten werden. Geeignete Oligomerisierungsreaktionen sind z.B. die Carbodiimidisierung, Dimerisierung, Trimersisierung, Biuretisierung, Harnstoffbildung, Urethanisierung, Allophanatisierung und/oder Cyclisierung unter Ausbildung von Oxadiazinstrukturen. Oftmals laufen bei der "Oligomerisierung" mehrere der genannten Reaktionen gleichzeitig oder nacheinander ab.

Bevorzugt handelt es sich bei den "Lackpolyisocyanaten" (ii) um Biuretpolyisocyanate, Isocyanuratgrupen-aufweisende Polyisocyanate, Isocyanurat- und Uretdiongruppen-aufweisende Polyisocyanatgemische, Urethan- und/oder Allophanatgruppen-aufweisende Polyisocyanate oder um Isocyanurat- und Allophanatgruppen-aufweisende Polyisocyanatgemische auf Basis, einfacher Diisocyanate.

Die Herstellung von derartigen Lackpolyisocyanaten ist bekannt und beispielsweise in der DE-A 1 595 273, DE-A 3 700 209 und DE-A 3 900 053 oder in der EP-A-0 330 966, EP-A 0 259 233, EP-A- 0 377 177, EP-A-0 496 208, EP-A-0 524 501 oder US-A 4 385 171 beschrieben.

Polyisocyanate der Gruppe (iii) sind die an sich bekannten Isocyanatgruppen aufweisenden Prepolymere auf Basis von einfachen Diisocyanaten der oben beispielhaft genannten Art und/oder auf Basis von Lackpolyisocyanaten (ii) einerseits und organischen Polyhydroxyverbindungen eines über 300 g/mol liegenden zahlenmittleren Molekulargewichts andererseits. Während es sich bei den urethangruppenaufweisenden Lackpolyisocyanaten der Gruppe (ii) um Derivate von niedermolekularen Polyolen des zahlenmittleren Molekulargewichtsbereichs von 62 bis 300 g/mol handelt, geeignete Polyole sind beispielsweise Ethylenglykol, Propylenglykol, Trimethylolpropan, Glycerin oder Gemische dieser Alkohole, werden zur Herstellung der NCO-Prepolymeren der Gruppe (iii) Polyhydroxylverbindungen mit zahlenmittleren Molekulargewichten von über 300 g/mol, bevorzugt über 500 g/mol, besonders bevorzugt von 500 bis 8000 g/mol eingesetzt. Derartige Polyhydroxylverbindungen sind insbesondere solche, die pro Molekül 2 bis 6, bevorzugt 2 bis 3 Hydroxylgruppen aufweisen und aus der Gruppe, bestehend aus Ether-, Ester-, Thioether-, Carbonat- und Polyacrylatpoloyolen und Gemischen aus derartigen Polyolen ausgewählt sind.

Bei der Herstellung der NCO-Prepolymeren (iii) können die genannten höhermolekularen Polyole auch in Abmischungen mit den genannten niedermolekularen Polyolen zur Anwendung gelangen, so dass unmittelbar Gemische aus niedermolekularen, Urethangruppen aufweisenden Lackpolyisocyanaten (ii) und höhermolekularen NCO-Prepolymeren (iii) resultieren, die ebenfalls als erfindungsgemäße Ausgangskomponente (C) geeignet sind.

Zur Herstellung der NCO-Prepolymeren (iii) oder deren Gemische mit den Lackpolyisocyanaten (ii) werden Diisocyanate (i) der oben beispielhaft genannten Art oder Lackpolyisocyanate der unter (ii) beispielhaft genannten Art mit den höhermolekularen Hydroxylverbindungen oder deren Gemischen mit niedermolekularen Polyhydroxylverbindungen der beispielhaft genannten Art unter Einhaltung eines NCO/OH Äquivalentverhältnisses von 1,1:1 bis 40:1, bevorzugt 2:1 bis 25:1 unter Urethanbildung umgesetzt. Gegebenenfalls kann bei Verwendung eines Überschusses an destillierbarem Ausgangsdiisocyanat dieser im Anschluss an die Umsetzung destillativ entfernt werden, so dass monomerenfreie NCO-Prepolymere, d.h. Gemische aus Ausgangsdiisocyanaten (i) und echten NCO-Prepolymeren (iii) vorliegen, die ebenfalls als Komponente (A) eingesetzt werden können.

Niedrigviskose, hydrophilierte Polyisocyanate mit freien Isocyanatgruppen auf Basis aliphatischer, cycloaliphatischer, araliphatischer und/oder aromatischer Isocyanate, besonders bevorzugt aliphatischer oder cycloaliphatischer Isocyanate können auch eingesetzt werden.

Eine Hydrophilierung der Polyisocyanate ist z.B. durch Umsetzung mit unterschüssigen Mengen an einwertigen, hydrophilen Polyetheralkoholen möglich. Die Herstellung derartiger hydrophilierter Polyisocyanate ist beispielsweise in der EP-A 0 540 985, S. 3, Z 55 - S. 4 Z. 5 beschrieben. Gut geeignet sind auch die in der EP-A 959087, S. 3 Z. 39 - 51 beschriebenen Allophanatgruppen enthaltenden Polyisocyanate, die durch Umsetzung monomerenarmer Polyisocyanate mit Polyethylenoxidpolyetheralkoholen unter Allophanatisierungsbedingungen hergestellt werden. Auch die in der DE-A 10 007 821, S. 2 Z. 66 - S. 3 Z. 5, beschriebenen wasser-dispergierbaren Polyisocyanatgemische auf Basis von Triisocyanatononan sind geeignet, sowie mit ionischen Gruppen (Sulfonat-, Phosphonatgruppen) hydrophilierte Polyisocyanate, wie sie z.B. in der DE-A 10 024 624, S. 3 Z. 13 - 33 beschrieben sind. Ebenso möglich ist die Hydrophilierung durch Zusatz handelsüblicher Emulgatoren.

Grundsätzlich können in C) auch Polyisocyanate der vorstehend genannten Art mit blockierten NCO-Gruppen eingesetzt werden. Bevorzugt werden aber die vorstehend genannten Polyisocyanate eingesetzt, wobei auf eine Blockierung verzichtet wird.

Bevorzugte in C) eingesetzte Polyisocyanate sind Polyisocyanate der Gruppe (ii).

Prinzipell, ist natürlich auch der Einsatz von Mischungen verschiedener Polyisocyanate der vorstehend genannten Art möglich.

Ggf. darüber hinaus enthaltene Hilfs- und Zusatzstoffe können z. B. oberflächenaktive Substanzen, interne Trennmittel, Füllstoffe, Farbstoffe, Pigmente, Flammschutzmittel, Hydrolyseschutzmittel, Mikrobiozide, Verlaufshilfsmittel, Lösemittel, Antioxidantien wie 2,6-Di-tert-butyl-4-methyl-phenol, UV-Absorber vom Typ 2-Hydroxyphenyl-benzotriazol oder Lichtschutzmittel vom Typ der am Stickstoffatom substituierten oder unsubstituierten HALS-Verbindungen wie Tinuvin^{®} 292 und Tinuvin^{®} 770 DF (Ciba Spezialitäten GmbH, Lampertheim, DE) oder andere handelsübliche Stabilisierungsmittel, wie sie beispielsweise in "Lichtschutzmittel für Lacke" (A. Valet, Vincentz Verlag, Hannover, 1996 und "Stabilization of Polymeric Materials" (H. Zweifel, Springer Verlag, Berlin, 1997, Appendix 3, S. 181-213) beschrieben sind, oder beliebige Gemische dieser Verbindungen.

Als Lösemittel sind beispielsweise geeignet Ester, wie Ethylacetat, Butylacetat, Methoxypropylacetat, Methylglykolacetat, Ethylglykolacetat, Diethylenglykolmonomethyletheracetat; Ketone, wie z.B. Methylethylketon, Methylisobutylketon, Methylamylketon; Aromaten, wie z.B. Toluol und Xylol sowie die in der Lackchemie üblichen höhersiedenden Kohlenwasserstoffgemische.

Zur Herstellung der erfindungsgemäße Zwei-Komponenten-Bindemittel werden die Einzelkomponenten miteinander vermischt.

Falls erforderlich können die dem Fachmann an sich aus der Polyurethanchemie bekannten Katalysatoren zur Beschleunigung der NCO/OH bzw. NH-Reaktion eingesetzt werden. Derartige Katalysatoren sind beispielsweise Organometallverbindungen, Amine (z.B. tertiäre Amine) oder Metallverbindungen wie Bleioctoat, Quecksilbersuccinat, Zinnoctoat oder Dibutylzinndilaurat.

Die genannten Beschichtungsmittel können mit den an sich bekannten Techniken wie Sprühen, Tauchen, Fluten, Rollen, Streichen oder Gießen auf Oberflächen appliziert werden. Nach dem Ablüften gegebenenfalls vorhandener Lösungsmittel, härten die Beschichtungen dann bei Umgebungsbedingungen oder auch bei höheren Temperaturen von beispielsweise 40 bis 200 °C.

Die genannten Beschichtungsmittel können beispielsweise auf Metalle, Kunststoffe, Keramik, Glas sowie Naturstoffe aufgebracht werden, wobei die genannten Substrate zuvor einer gegebenenfalls notwendigen Vorbehandlung unterzogen worden sein können.

Die erfindungsgemäßen Zusammensetzungen können außer in Beschichtungen auch in Klebstoffen und Dichtungsmassen eingesetzt werden, die daher ebenso Gegenstand der vorliegenden Erfindung sind wie mit den erfindungsgemäßen Zusammensetzungen beschichtete oder verklebte Substrate.

### Beispiele:

Die dynamischen Viskositäten wurden bei 23°C mit einem Rotationsviskosimeter (ViscoTester^{®} 550, Thermo Haake GmbH, D-76227 Karlsruhe) bestimmt.

Die OH-Zahl wurde bestimmt nach DIN 53240 T.2

Der Epoxidgruppengehalt wurde nach DIN 16945 bestimmt, wobei im Rahmen der vorliegenden Erfindung der Epoxidgruppengehalt auf eine molare Masse von 42 g/mol bezogen wurde.

Die Glanzmessung wurde nach DIN 67530 durchgeführt.

Haze wurde nach DIN 67530 bestimmt.

Die Pendelhärte nach König wurde nach DIN 53157 nach 7 tägiger Lagerung bei Raumtemperatur bestimmt.

Die easy-to-clean Eigenschaften wurden so bestimmt, dass ein Lumocolor Permanent-Marker 350 (Staedler, Nürnberg, DE) in rot aufgetragen wurde und für 1 Minute einwirken gelassen wurde. Anschließend wurde versucht, die Markierung mit einem trockenen und mit einem in Ethanol befeuchteten Zellstoffpapier zu entfernen.

### Edukte

MPA: Methoxypropylacetat
DBTL: Dibutylzinndilaurat
Tego^{®} Twin 4000: Verlaufsadditiv auf Basis Polydimethylsiloxan, Goldschmidt, Essen, DE

### Herstellung Polyol I:

770 g eines Epoxids der Formel 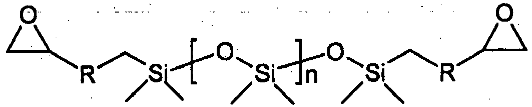 mit einem zahlenmittleren Molekulargewicht von 700 g/mol und R = CH₂ wurden vorgelegt und mit 231 g Diethanolamin versetzt. Diese Mischung wurde anschließend 2 Stunden bei 100°C gerührt. Das Produkt war epoxygruppenfrei mit einer OH-Zahl von 370 mg KOH/g und einer Viskosität bei 23°C von 2900 mPas.

### Vergleichspolyol I:

Zum Vergleich wurden Polyole der Formel 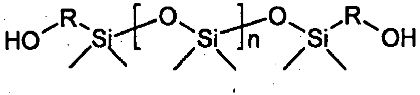 eingesetzt, wobei deren Eigenschaften in der nachstehenden Tabelle zusammengefasst sind:

| Vergleichspolyole | Baysilone^{®} | Baysilone^{®} | Wacker | Tegomer^{®} |
|---|---|---|---|---|
| | OF/OH 502 | OF/OH 502 | IM11 | HSi 2311 |
| | 6% | 3% | | |

| Hersteller | GE-Bayer-Silicones | GE-Bayer-Silicones | Wacker | Tego |
|---|---|---|---|---|
| R= | CH₂ | CH2 | CH₂CH(CH₃) | (CH₂)₃ |
| Viskosität 25°C (mPa.s) | 20 - 50 | 20 - 50 | 20 - 50 | 20 - 50 |
| OH-Zahl (mg KOH/g) | 198 | 99 | 96 | 36 |
| Molekulargewicht (g/mol) | 566 | 1133 | 1172 | 2946 |

**Polyol II:** verzweigtes kurzkettiges Polyesterpolyol mit einer OH-Zahl von 512 mg KOH/g und einer Viskosität bei 23 °C von 1900 mPa.s; Desmophen^{®} VPLS 2249/1, Bayer Materialscience AG, Leverkusen, DE
**Polyisocyanat:** Biuret-Polyisocyanat auf Basis 1,6-Hexandiisocyanat mit einem NCO-Gehalt von 23 Gew.-% und einer Viskosität bei 23 °C von 2500 mPas, Bayer MaterialScience AG, Leverkusen, DE.

### Lackherstellung

Die Komponenten wurden gemäß nachfolgender Tabelle mit handelsüblichen Lackadditiven; Katalysatoren und Polyisocyanaten unter Rühren versetzt, anschließend mit einem 50 µm Rakel auf Glas appliziert und 60 min bei 100°C ausgehärtet.

| **Beispiel** | **1** | **2** | **3** | **4** | **5** | **6** |
|---|---|---|---|---|---|---|
| Polyol I | 5 | | | | | |
| Baysilone^{®} OF/OH 502 6% | | | 5 | | | |
| Baysilone^{®}, OF/OH 502 3% | | | | 5 | | |
| Wacker IM 11 | | | | | 5 | |
| Tegomer^{®} Esi 2311 | | | | | | 5 |
| Polyol II | 95 | 100 | 95 | 95 | 95 | 95 |
| Tego^{®} Twin 4000 | 0,1 | 0,03 | 0,03 | 0,03 | 0,03 | 0,03 |
| DBTL | 0,1 | 0,03 | 0,03 | 0,03 | 0,03 | 0,03 |
| Desmodur^{®} N3200 | 164 | 166 | 161 | 159 | 159 | 159 |
| Pendelhärte | 100 | 149 | 111 | 71 | 99 | 84 |
| Glanz | 86 | 86 | 85 | 84 | 84 | 83 |
| Haze | 13 | 12 | <10 | <10 | 11 | 17 |
| Schleier auf Glassplatte | 0 | 0 | 2 | 5 | 4 | 5 |
| Easy to Clean | | | | | | |
| trocken | 1 | 4 | 3 | 3 | 3 | 3 |
| Ethanol | 1 | 3 | 3 | 3 | 2 | 3 |

| | | | | | | |
|---|---|---|---|---|---|---|
| 0 = gut, 5 = schlecht; Mengenangaben in Gramm | | | | | | |

Die erfindungsgemäße Zusammensetzung nach Beispiel 1 liefert einen klaren Film mit einer glatten Oberfläche und guten easy-to-clean Eigenschaften.

Das Vergleichsbeispiel 2 enthält keine Silikonkomponente und hat keine nennenswerten easy-to-clean Eigenschaften. Die Vergleichsbeispiele 3 bis 6 enthalten zwar genau soviel eines OHfunktionellen Siloxans wie in Beispiel 1, haben jedoch schlechtere easy-to-clean Eigenschaften und eine schlechtere Filmoptik.

## Patentansprüche

1. Zusammensetzungen enthaltend
A) hydroxylgruppenhaltige Polydimethylsiloxane mit zahlenmittleren Molekulargewichten von 400 bis 3000 g/mol und einer mittleren OH-Funktionalität von ≥ 1,8, **dadurch gekennzeichnet, dass** diese wenigstens eine Struktureinheit der Formel (I) aufweisen: 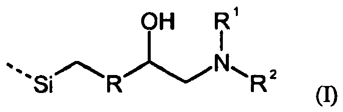 wobei
R ein aliphatischer gegebenenfalls verzweigter C₁- bis C₂₀-Rest ist,
R¹ ein gegebenenfalls verzweigter Hydroxyalkylrest mit 2 bis 10 Kohlenstoffatomen ist und
R² entweder Wasserstoff ist oder der Definition des Restes R¹ entspricht
und
B) weitere von A) verschiedene Polyhydroxyverbindungen oder Polyamine und
C) Polyisocyanate.

2. Zusammensetzungen gemäß Anspruch 1, **dadurch gekennzeichnet, dass** Komponenten A) und B) so eingesetzt, dass 0,1 bis 10 Gew.% Komponente A) und 90 bis 99,90 Gew.-% Komponente B) vorliegen.

3. Zusammensetzungen gemäß Anspruch 1 oder 2, **dadurch gekennzeichnet, dass** das Verhältnis von NCO-Gruppen zu OH und/oder NH-funktionellen Verbindungen 0,5 : 1 bis 2,0 : 1 beträgt.

4. Zusammensetzungen gemäß einem der Ansprüche 1 bis 3, **dadurch gekennzeichnet, dass** die Reste R¹ und R² gleich sind und für HO-CH₂-CH₂₋ stehen.

5. Zusammensetzungen gemäß einem der Ansprüche 1 bis 4, **dadurch gekennzeichnet, dass** diese als Hilfs- und Zusatzstoffe oberflächenaktive Substanzen, interne Trennmittel, Füllstoffe, Farbstoffe, Pigmente, Flammschutzmittel, Hydrolyseschutzmittel, Mikrobiozide, Verlaufshilfsmittel, Lösemittel und/oder Antioxidantien enthalten.

6. Beschichtungen, Verklebungen oder Dichtungsmassen erhältlich aus Zusammensetzungen gemäß einem der Ansprüche 1 bis 5.

7. Substrate beschichtet oder verklebt mit einer Beschichtung, Verklebung oder Dichtungsmasse gemäß Anspruch 6.

## Claims

1. Compositions comprising
A) hydroxyl-containing polydimethylsiloxanes having number-average molecular weights of 400 to 3000 g/mol and an average OH functionality of ≥ 1.8, **characterized in that** they include at least one structural unit of the formula (I): 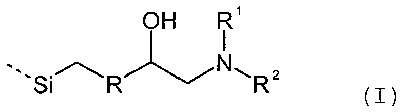 where
R is an aliphatic, optionally branched C₁ to C₂₀ radical,
R¹ is an optionally branched hydroxyalkyl radical having 2 to 10 carbon atoms and
R² either is hydrogen or corresponds to the definition of the radical R¹
and
B) further, non-A) polyhydroxy compounds or polyamines, and
C) polyisocyanates.

2. Compositions according to Claim 1, **characterized in that** components A) and B) are used such that there are 0.1% to 10% by weight of component A) and 90% to 99.90% by weight of component B).

3. Compositions according to Claim 1 or 2, **characterized in that** the ratio of NCO groups to OH and/or NH-functional compounds is 0.5 : 1 to 2.0 : 1.

4. Compositions according to any one of Claims 1 to 3, **characterized in that** the radicals R¹ and R² are the same and are HO-CH₂-CH₂-.

5. Compositions according to any one of Claims 1 to 4, **characterized in that** as auxiliaries and additives they include surface-active substances, internal release agents, fillers, dyes, pigments, flame retardants, hydrolysis inhibitors, microbiocides, flow control assistants, solvents and/or antioxidants.

6. Coatings, adhesive bonds or sealants obtainable from compositions according to any one of Claims 1 to 5.

7. Substrates coated or bonded with a coating, adhesive bond or sealant according to Claim 6.

## Revendications

1. Compositions contenant
A) des polydiméthylsiloxanes contenant des groupes hydroxyle ayant des poids moléculaires moyens en nombre de 400 à 3 000 g/mol et une fonctionnalité OH moyenne ≥ 1,8, **caractérisées en ce que** ceux-ci comprennent au moins une unité structurale de formule (I) : 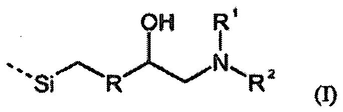 dans laquelle
R est un radical en C₁ à C₂₀ aliphatique éventuellement ramifié,
R¹ est un radical hydroxyalkyle éventuellement ramifié contenant 2 à 10 atomes de carbone, et
R² est l'hydrogène ou correspond à la définition du radical R¹,
et
B) d'autres composés polyhydroxy ou polyamines différents de A), et
C) des polyisocyanates.

2. Compositions selon la revendication 1, **caractérisées en ce que** les composants A) et B) sont utilisés de manière à ce que 0,1 à 10 % en poids du composant A) et 90 à 99,90 % en poids du composant B) soient présents.

3. Compositions selon la revendication 1 ou 2, **caractérisées en ce que** le rapport entre les groupes NCO et les composés à fonction OH et/ou NH est de 0,5:1 à 2,0:1.

4. Compositions selon l'une quelconque des revendications 1 à 3, **caractérisées en ce que** les radicaux R¹ et R² sont identiques et représentent HO-CH₂-CH₂-.

5. Compositions selon l'une quelconque des revendications 1 à 4, **caractérisées en ce que** celles-ci contiennent en tant qu'adjuvants et additifs des substances tensioactives, des agents de séparation internes, des charges, des colorants, des pigments, des agents ignifuges, des agents anti-hydrolyse, des microbicides, des adjuvants d'écoulement, des solvants et/ou des antioxydants.

6. Revêtements, adhésifs ou matériaux d'étanchéité pouvant être obtenus à partir de compositions selon l'une quelconque des revendications 1 à 5.

7. Substrats revêtus ou collés avec un revêtement, un adhésif ou un matériau d'étanchéité selon la revendication 6.
